# EUROPÄISCHE PATENTSCHRIFT

(11) **EP 0 970 301 B1**
(45) Veröffentlichungstag und Bekanntmachung des Hinweises auf die Patenterteilung: **02.10.2002**
(21) Anmeldenummer: 98912402.9
(22) Anmeldetag: 26.02.1998
(51) Int. Cl.: F02B 27/02

(54) **SCHALTWAL EINER SAUGROHRANLAGE FÜR EINE MEHRZYLINDER-BRENNKRAFTMASCHINE**
CAMSHAFT CONTROLLER IN AN INDUCTION MANIFOLD SYSTEM OF A MULTI-CYLINDER INTERNAL COMBUSTION ENGINE
COMMUTATEUR A CAMES DANS UN SYSTEME DE COLLECTEUR D'ADMISSION D'UN MOTEUR A COMBUSTION INTERNE A CYLINDRES MULTIPLES

(30) Priorität: 26.03.1997 DE 19712680
(43) Veröffentlichungstag der Anmeldung: 12.01.2000
(73) Patentinhaber: FILTERWERK MANN & HUMMEL GmbH, 71631 Ludwigsburg (DE)
(72) Erfinder: ALEX, Matthias, D-74074 Heilbronn (DE); ERNST, Volker, D-74353 Sachsenheim (DE); GEIGER, Michael, D-71691 Freiberg (DE); KLOTZ, Arthur, D-71686 Remseck (DE); KOSICKI, Jürgen, D-74391 Erligheim (DE); RENTSCHLER, Klaus, D-71126 Gäufelden (DE)
(74) Vertreter: Voth, Gerhard, Dipl.-Ing.
(86) Internationale Anmeldenummer: EP9801090
(87) Internationale Veröffentlichungsnummer: WO98042966

(56) Entgegenhaltungen:
- EP-A- 0 691 461
- DE-A- 4 344 504
- DE-A- 19 536 947

## Beschreibung

Die Erfindung betrifft eine Schaltwalze, einer Saugrohranlage für eine Mehrzylinder-Brennkraftmaschine nach dem Oberbegriff des Hauptanspruchs.

Eine solche Schaltwalze ist beispielsweise aus dem US-PS 4932369 bekannt. Diese ist in einer Saugrohranlage angeordnet, wobei ein Ansaugverteiler vorgesehen ist, von welchem nebeneinander angeordnete Einzelsaugrohre zu einem Flansch führen. Über diesen Flansch wird diese Saugrohranlage an dem Zylinderkopf einer Mehrzylinderbrennkraftmaschine befestigt. Die Einzelsaugrohre werden von einer Längsbohrung geschnitten. In dieser Längsbohrung ist eine Schaltwalze vorgesehen, welche derart gestaltet ist, daß durch das Umschalten die Saugrohrlänge verändert wird.

Es ist weiterhin aus der DE-OS 4344504 eine Saugrohranlage für eine Mehrzylinderbrennkraftmaschine bekannt. Diese weist ebenfalls eine Schaltwalze auf, welche in einer Längsbohrung angeordnet ist, wobei mit der Schaltwalze zusätzliche Leistungskanäle ein- bzw. ausgeschaltet werden können.

Sofern die Ansauganlage aus Kunststoff besteht, ist es erforderlich, die Fertigungstoleranzen durch entsprechende Elemente, wie z.B. einer eingepreßten Metallhülse auszugleichen. Die Herstellung wird damit sehr aufwendig. Außerdem besteht das Problem, daß eine Wiederverwertung des Kunststoffbauteils und der eingebauten Metallhülse nicht oder nur nach einer entsprechend aufwendigen Montage möglich ist.

Aus der EP A 96 1461 ist es bekannt, eine Ansauganlage für eine Mehrzylinderbrennkraftmaschine zu gestalten, welche mit einer Schaltwalze versehen ist. Diese Schaltwalze weist Dichtungen (Dichtringe) zwischen den einzelnen Ansaugöffnungen auf, die die Walze nur in einzelne zylindrische Abschnitte dichtend unterteilen. Diese Dichtungen sind aufwendig zu montieren und erhöhen damit die Herstellungskosten.

Die Aufgabe der Erfindung liegt darin, die genannten Nachteile zu vermeiden und eine Schaltwalze zu schaffen, welche eine hohe Dichtigkeit aufweist, bei der Toleranzen wirksam ausgeglichen werden und die kostengünstig herstellbar ist.

Diese Aufgabe wird durch die kennzeichnenden Merkmale des Hauptanspruchs gelöst.

Der wesentliche Vorteil der Erfindung liegt darin, daß die Schaltwalze spezielle, den Einzelsaugrohren zugeordnete Dichtungselemente aufweist, wobei die Dichtungselemente das Drehmoment zum Bewegen der Schaltwalze nur unwesentlich verändern.

Jedes einzelne Dichtungselement ist aus zwei Dichtleisten gestaltet, welche parallel verlaufen und an ihren Enden mit radialelastischen Ringelementen verbunden sind. Damit wird ein Dichtfenster gebildet, das aufgrund der Elastizität der Ringelemente federnd zwischen Schaltwalze und der Innenwandung der Längsbohrung anliegt und damit jeden einzelnen Kanal bzw. jeden Strömungsquerschnitt der Einzelsaugrohre zuverlässig abdichtet. Das Dichtungselement kann dabei an der Eintritts- oder der Austrittsöffnung des Ansaugrohres angeordnet sein. Es ist zweckmäßig, dasselbe dort vorzusehen, wo es die optimalste Wirkung entfaltet.

Eine vorteilhafte Weiterbildung der Erfindung besteht ferner darin, die Ringelemente in Nuten der Schaltwalze zu fixieren. Die Ringelemente werden dabei wie eine Klammer über die Schaltwalze gesteckt und dichten nach Art einer Kolbenringdichtung die Schaltwalze ab.

Eine weitere Ausgestaltung der Schaltwalze sieht vor, diese aus einzelnen Segmenten zu formen. Dabei werden die Segmente derart verbunden, daß einerseits eine hohe Torsionssteifigkeit erzielt wird, andererseits aber eine gewisse radiale Beweglichkeit verbleibt, um Toleranzen auszugleichen.

Es ist weiterhin von Vorteil, wenigstens ein Ende der Schaltwalze mit einem Gleitlager zu versehen, wobei die Gleitlagerbuchse unter Zwischenschaltung eines elastischen Elements in einer Aufnahme der Saugrohranlage befestigt ist. Die Zwischenschaltung des elastischen Elements dämpft Schwingungen und führt ebenfalls zu einem Toleranzausgleich.

Das Drehen der Schaltwalze erfolgt zweckmäßigerweise mit einem Stellglied. Dies kann ein Elektromotor, eine Unterdruckdose oder ein beliebiges hydraulisch oder mechanisch angetriebenes Element sein. Die Stellbewegung wird in vorteilhafter Weise mit einer radial beweglichen Klauenkupplung übertragen.

Zusätzlich kann eine Verspannung bzw. eine Verbindung zwischen Stellglied und Schaltwalze durch Zapfen und Buchse erfolgen, wobei diese über die Zwischenschaltung eines dämpfenden Elements, wie z. B. eines O-Rings, verbunden sind. Die Anwendung der Schaltwalze ist überall dort möglich, wo ein Kanal oder ein Volumen zu- bzw. abgeschaltet werden muß. Beispielsweise ist auch eine Anwendung bei einem adaptiven Nebenschlußresonator denkbar.

Die Anwendung von Dichtungselementen auf der Schaltwalze ermöglicht eine konische Ausgestaltung der Längsbohrung. Durch diese konische Ausgestaltung ist eine einfachere Entformbarkeit der Saugrohranlage gegeben.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand von Ausführungsbeispielen erläutert. Es zeigt:
- Figur 1: eine Schaltwalze in einer Saugrohranlage in Längsschnittdarstellung,
- Figur 2: die Schaltwalze in einer Detaildarstellung,
- Figur 3: einen Dichtkäfig in perspektivischer Darstellung,
- Figur 4: den Dichtkäfig in einer Schnittdarstellung,
- Figur 5: den Ausschnitt einer Saugrohranlage mit einem Drehschieber in der Geschlossenstellung,
- Figur 6: den Ausschnitt einer Saugrohranlage mit einem Drehschieber in der Offenstellung.

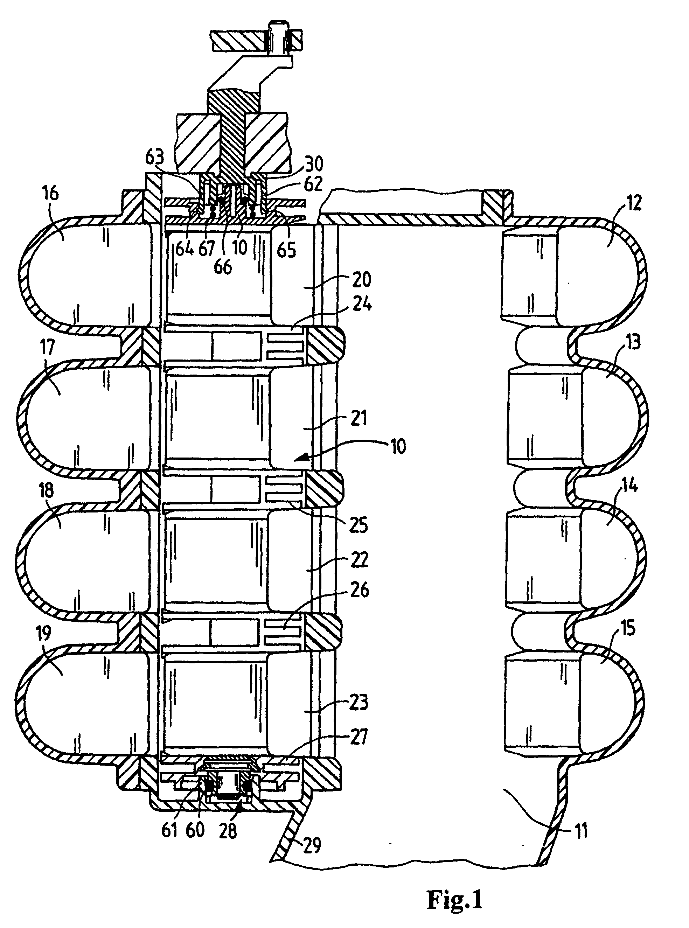

Eine Draufsichtdarstellung gemäß Figur 1 mit einer Schaltwalze in einer Saugrohranlage zeigt einen Ansaugverteiler 11 für eine Vierzylinderbrennkraftmaschine. Von dem Ansaugverteiler 11 gehen Einzelsaugrohre 12, 13, 14, 15 zu einem hier nicht dargestellten Anschlußflansch. Eine Schaltwalze 10 öffnet oder schließt sogenannte Leistungskanäle. Diese können aus kürzeren Einzelsaugrohren 16, 17, 18 19 bestehen, welche ebenfalls in den Anschlußflansch einmünden. Die Schaltwalze 10 weist Öffnungen 20, 21, 22, 23, auf. Zwischen diesen befinden sich Stützstege 24, 25, 26, 27. Die Schaltwalze ist über ein Gleitlager 28 und ein elastisches Element in dem Ansaugverteilergehäuse 29 gelagert. Auf der gegenüberliegenden Seite weist die Schaltwalze einen Hebelarm 30 auf, über welchen mit einem hier nicht dargestellten Stellglied diese in mehrere Stellungen gedreht werden kann.

Das Gleitlager 28 ist über einen O-Ring 60 elastisch in einer Aufnahme 61 des Ansaugverteilers 11 gelagert. Damit lassen sich Längentoleranzen Ausgleichen. Außerdem sorgt die elastische Lagerung für eine Schwingungsdämpfung. Der Hebelarm 30 ist mit Stegen 62, 63 ausgestattet. Diese greifen in Nuten 64, 65 ein und bilden damit eine Klauenkupplung. Zusätzlich ist eine elastische Kupplung zwischen dem Hebelarm 30 und der Schaltwalze 10 über einen O-Ring 66 vorgesehen. Eine Feder 67 sorgt für einen Längentoleranzausgleich.

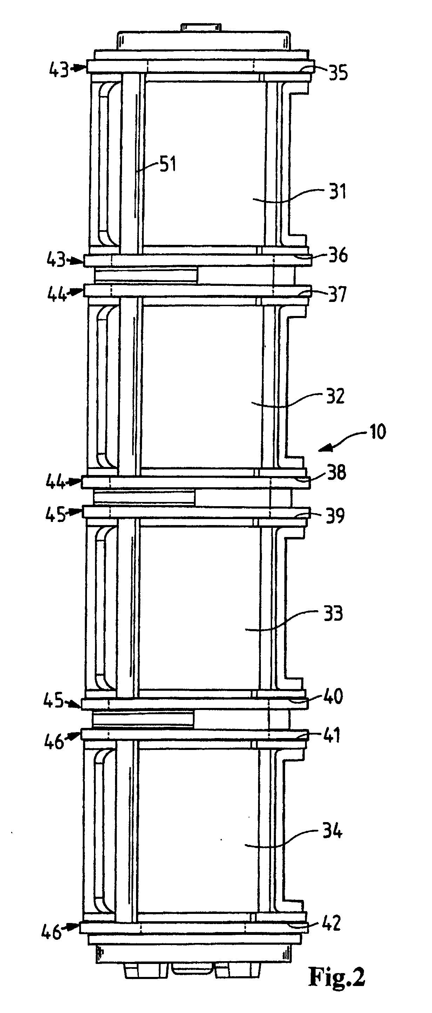

In Figur 2 ist eine Schaltwalze 10 in einer Detaildarstellung gezeigt. Diese Schaltwalze weist Öffnungen 31, 32, 33, 34 zum Durchtritt der Ansaugluft auf. Seitlich an den Öffnungen sind Nuten 35 bis 42 vorgesehen. In diesen ist ein Dichtungselement in Form eines Dichtkäfigs 43 - 46 jeweils eingesetzt.

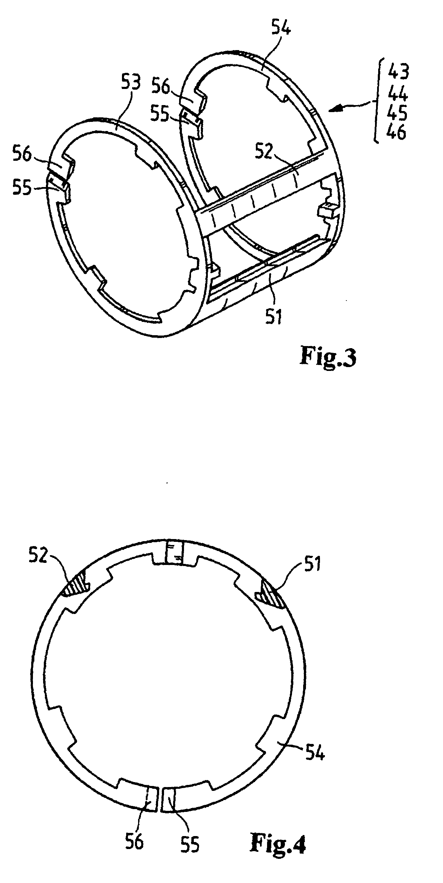

Figur 3 zeigt einen Dichtkäfig in einer perspektivischen Darstellung. Dieser besteht aus zwei Dichtleisten 51, 52. Diese können parallel verlaufen und sind an ihren Enden jeweils mit einem Ringelement 53, 54 verbunden.

In der detaillierten Darstellung gemäß Figur 4 läßt sich erkennen, daß die Dichtleisten jeweils eine angeformte Nase aufweisen. Diese Nasen sorgen dafür, daß der Dichtkäfig an Hinterschnitten der Schaltwalze eingreifen und einrasten und gleichzeitig Dichtfunktion gewährleisten. Das Ringelement 54 ist gegenüber dem Befestigungsbereich der Dichtleisten 51, 52 offen und kann damit bei dem Montieren auf die Schaltwalze gespreizt werden und in die entsprechenden Nuten eingreifen. Im montierten Zustand greifen die Endstücke 55, 56 des Ringelements 54 aufgrund jeweils einer Abschrägung ineinander und bilden damit einen geschlossenen Dichtring nach Art einer Kolbendichtung.

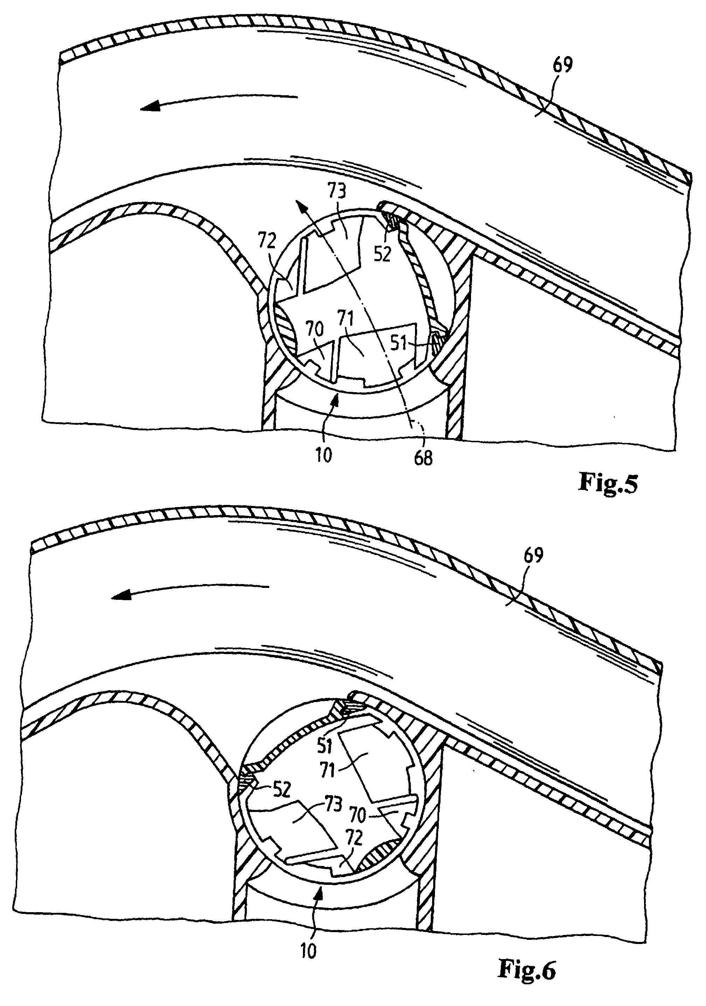

Figur 5 zeigt die Schaltwalze 10 in einem Einzelsaugrohr 12 eines Ansaugverteilers 11 in der geschlossenen Stellung. Der Dichtkäfig 43 dichtet im Anströmbereich über die beiden Dichtleisten 51, 52 die Zutrittsöffnung ab. Außerdem sorgt das Ringelement 53 für die seitliche Abdichtung und verhindert damit gleichzeitig eine Querströmung in der Längsbohrung. Zum Öffnen des Einzelsaugrohres 12 wird die Schaltwalze 10 um ca. 90 ° geschwenkt. Aufgrund der Federeigenschaften der Ringelemente des Dichtkäfigs ist dafür gesorgt, daß diese sowie die beiden Dichtleisten in jeder Stellung der Schaltwalze an der Wandung der Längsbohrung anliegt und damit die Dichtheit gewährleistet.

Figur 6 zeigt die Variante einer Ansauganlage mit einem Drehschieber in der Offenstellung, d. h. hier kann zusätzlich Ansaugluft über den Leistungskanal gemäß dem Pfeil 68 in den Hauptansaugkanal 69 einströmen. Der Drehschieber bzw. die Schaltwalze 10 ist mit Queröffnungen 70, 71, 72, 73 versehen. Diese stellen eine Verbindung zwischen den einzelnen Ansaugkanälen in der Offenstellung her und verbessern damit die Luftzufuhr zu den einzelnen Zylindern der Brennkraftmaschine.

## Patentansprüche

1. Schaltwalze einer Saugrohranlage für eine Mehrzylinder-Brennkraftmaschine mit einem Ansaugverteiler und nebeneinander angeordneten Einzelsaugrohren, welche in einem Flansch enden, wobei in einer Längsbohrung der Einzelsaugrohre die Schaltwalze angeordnet ist zum Verschließen und Öffnen der Einzelsaugrohre, wobei jedem Einzelsaugrohr (16 - 19) zugeordnet ein Dichtungselement (43 - 50) an der Schaltwalze (10) angeordnet ist, **dadurch gekennzeichnet, daß** das Dichtungselement aus wenigstens zwei Dichtleisten (51, 52) besteht, welche parallel verlaufen können und an ihren Enden mit radialelastischen Ringelementen (53, 54) verbunden sind, wobei die Dichtleisten (51, 52) federnd an der Eintrittsoder Austrittsöffnung jedes Einzelsaugrohres (16 -19) zu der die Schaltwalze (10) aufnehmenden Längsbohrung anliegen.

2. Schaltwalze nach Anspruch 1 oder 2, **dadurch gekennzeichnet, daß** die Ringelemente (53, 54) in Nuten (35 - 42) der Schaltwalze (10) fixiert sind.

3. Schaltwalze nach einem der vorherigen Ansprüche, **dadurch gekennzeichnet, daß** diese aus einzelnen Segmenten besteht, welche torsionssteif und radial beweglich miteinander gekoppelt sind.

4. Schaltwalze nach einem der vorherigen Ansprüche, **dadurch gekennzeichnet, daß** wenigstens ein Ende mit einem Gleitlager (28) versehen ist, wobei die Gleitlagerbuchse unter Zwischenschaltung eines elastischen Elements mit einer Aufnahme der Saugrohranlage befestigt ist.

5. Schaltwalze nach einem der vorherigen Ansprüche, **dadurch gekennzeichnet, daß** ein Stellglied zum Drehen der Schaltwalze (10) vorgesehen ist und die Stellbewegung über eine Klauenkupplung auf die Schaltwalze (10) eingeleitet wird.

6. Schaltwalze nach Anspruch 5, **dadurch gekennzeichnet, daß** ein Zapfenlager vorgesehen ist, welches zwischen Zapfen und Buchse ein elastisches Element, insbesondere einen O-Ring aufweist.

7. Schaltwalze nach einem der vorherigen Ansprüche, **dadurch gekennzeichnet, daß** Queröffnungen vorgesehen sind, welche bei geöffneten Einzelsaugrohren Querverbindungen zwischen den Einzelsaugrohren darstellen.

## Claims

1. Drum controller of an induction manifold system for a multicylinder internal combustion engine, said controller having an intake distributor and individual induction manifolds disposed adjacent one another, which manifolds terminate in a flange, the drum controller being disposed in an elongate bore in the individual induction manifolds for closing and opening the individual induction manifolds, a sealing member (43 - 50) being disposed on the drum controller (10) and being associated with each individual induction manifold (16 - 19), **characterised in that** the sealing member comprises at least two sealing strips (51, 52) which may extend parallel and are connected at their ends to radially resilient annular members (53, 54), the sealing strips (51, 52) resiliently abutting against the inlet or outlet aperture of each individual induction manifold (16 - 19) leading to the elongate bore which accommodates the drum controller (10).

2. Drum controller according to claim 1, **characterised in that** the annular members (53, 54) are secured in grooves (35 - 42) of the drum controller (10).

3. Drum controller according to one of the previous claims, **characterised in that** said controller comprises individual segments which are interconnected in a torsion-resistant and radially displaceable manner.

4. Drum controller according to one of the previous claims, **characterised in that** at least one end is provided with a friction bearing (28), the friction bearing bush being mounted by the interposition of a resilient member with a means for receiving the induction manifold system.

5. Drum controller according to one of the previous claims, **characterised in that** a control member is provided to rotate the drum controller (10), and the setting movement is introduced to the drum controller (10) via a claw coupling.

6. Drum controller according to claim 5, **characterised in that** a journal bearing is provided, which has a resilient member, more especially an O-ring, between journal and bush.

7. Drum controller according to one of the previous claims, **characterised in that** transverse apertures are provided, which represent transverse connections between the individual induction manifolds when the individual induction manifolds are opened.

## Revendications

1. Cylindre de commutation pour un collection d'admission d'un moteur à combustion interne à plusieurs cylindres comprenant un distributeur d'admission et des tubes d'admission distinct, juxtaposés et terminées par une bride,
le cylindre de commutation étant installé dans un perçage longitudinal trouveront les différents tubes pour les fermer et l'ouvrir, le cylindre de commutation (10) commportant
pour chaque tube d'admission (16-19) un élément d'étanchéité (43-50),
**caractérisé en ce que**
l'élément d'étanchéité se compose d'au moins deux barrettes d'étanchéité (51, 52) qui peuvent être parallèles et dont les extrémités sont reliées à des éléments annulaires (53, 54) à élasticité radiale,
les barrettes d'étanchéité (51, 52) étant appliquées élastiquement contre l'orifice d'entrée ou l'orifice de sortie de chaque tube (16-19) vers le perçage longitudinal recevant le cylindre de commutation (10).

2. Cylindre de commutation selon l'une quelconque des revendications 1 ou 2,
**caractérisé en ce que**
les éléments annulaires (53, 54) sont fixés dans des rainures (35-42) du cylindre de commutation (10).

3. Cylindre de commutation selon l'une quelconque des revendications précédentes,
**caractérisé en ce qu'**
il se compose de segments séparés couplés les uns aux autres de manière rigide en torsion mais mobile radialement.

4. Cylindre de commutation selon l'une quelconque des revendications précédentes,
**caractérisé en ce qu'**
au moins une extrémité est munie d'un palier lisse (28) et le coussinet du palier lisse est fixé à un logement du collecteur d'admission avec interposition d'un élément élastique.

5. Cylindre de commutation selon l'une quelconque des revendications précédentes,
**caractérisé par**
un actionneur destiné à tourner le cylindre de commutation (10) et un embrayage à griffes pour transmettre le mouvement d'actionnement au cylindre de commutation (10).

6. Cylindre de commutation selon la revendication 5,
**caractérisé par**
un palier à tourillon comportant un élément élastique, notamment un joint torique entre le tourillon et le coussinet.

7. Cylindre de commutation selon l'une quelconque des revendications précédentes,
**caractérisé par**
des orifices transversaux constituant des liaisons transversales entre les différents tubes d'admission ouverts.
